# FASCICULE DE BREVET EUROPEEN

(11) **EP 3 918 040 B1**
(45) Date de publication et mention de la délivrance du brevet: **02.10.2024**
(21) Numéro de dépôt: 20701334.3
(22) Date de dépôt: 24.01.2020
(51) Int. Cl.: C10L 1/183, C10L 1/08, C10L 1/222, C10L 1/2383, C10L 10/06, C10G 75/04

(54) **UTILISATION D'UNE COMPOSITION DE CARBURANT À BASE D'HYDROCARBURES PARAFFINIQUES POUR NETTOYER LES PARTIES INTERNES DES MOTEURS DIESELS**
VERWENDUNG EINER KRAFTSTOFFZUSAMMENSETZUNG AUF DER BASIS VON PARAFFINISCHEN KOHLENWASSERSTOFFEN ZUR REINIGUNG DER INNEREN TEILE VON DIESELMOTOREN
USE OF A PARAFFINIC HYDROCARBON-BASED FUEL COMPOSITION FOR CLEANING THE INTERNAL PARTS OF DIESEL ENGINES

(30) Priorité: 31.01.2019 FR 1900938
(43) Date de publication de la demande: 08.12.2021
(73) Titulaire: TotalEnergies OneTech, 92400 Courbevoie (FR)
(72) Inventeur: DELORME, Géraldine, 69530 BRIGNAIS (FR); DAUPHIN, Roland, 1000 BRUXELLES (BE)
(74) Mandataire: Casalonga
(86) Numéro de dépôt international: PCT/EP2020/051740
(87) Numéro de publication internationale: WO 2020/156941

(56) Documents cités:
- WO-A1-2015/011505
- WO-A1-2019/007857
- WO-A2-03/091364
- US-A1- 2013 125 849
- US-A1- 2018 155 636
- HANNU AATOLA ET AL: "Hydrotreated Vegetable Oil (HVO) as a Renewable Diesel Fuel: Trade-off between NO x , Particulate Emission, and Fuel Consumption of a Heavy Duty Engine", 6 October 2008 (2008-10-06), XP055105376, Retrieved from the Internet <URL:http://www.biofuelstp.eu/downloads/SAE_Study_Hydrotreated_Vegetable_Oil_HVO_as_a_Renewable_Diesel_Fuel.pdf> [retrieved on 20140304], DOI: 10.4271/2008-01-2500

## Description

La présente invention porte sur l'utilisation d'une composition de carburant à base d'une ou plusieurs coupes riches en paraffines constituées d'huiles végétales hydrotraitées, pour réduire les dépôts présents dans les parties internes d'un moteur à allumage par compression (ou moteur Diesel).

La présente invention porte également sur une méthode de nettoyage des dépôts présents dans les parties internes d'un moteur à allumage par compression, mettant en oeuvre une telle composition.

### ETAT DE L'ART ANTERIEUR

Les carburants liquides de moteurs à combustion interne contiennent des composants pouvant se dégrader au cours du fonctionnement du moteur. La problématique des dépôts dans les parties internes des moteurs à combustion est bien connue des motoristes. Il a été montré que la formation de ces dépôts a des conséquences sur les performances du moteur et notamment a un impact négatif sur la consommation et les émissions de polluants.

Pour répondre à cette problématique, de nombreux additifs dits « détergents » ont été développés, c'est-à-dire des composés chimiques particuliers qui, ajoutés en très faible teneur (de l'ordre de 1 à 1000 ppm en poids), permettent de réduire les dépôts dans les parties internes des moteurs. Des additifs détergents ont été proposés pour maintenir la propreté du moteur en limitant les dépôts (effet « keep-clean » en anglais) ou en réduisant les dépôts déjà présents dans les parties internes du moteur à combustion (effet « clean-up » en anglais).

Néanmoins, la technologie des moteurs évolue sans cesse et les exigences sur les carburants doivent évoluer pour faire face à ces avancées technologiques. En particulier, les nouveaux systèmes d'injection directe Diesel exposent les injecteurs à des conditions plus sévères en pression et en température, ce qui favorise la formation de dépôts. En outre, ces nouveaux systèmes d'injection présentent des géométries plus complexes pour optimiser la pulvérisation, notamment des trous plus nombreux ayant des diamètres plus petits mais qui, en revanche, induisent une plus grande sensibilité aux dépôts. La présence de dépôts peut altérer les performances de la combustion, notamment augmenter les émissions polluantes et les émissions de particules. D'autres conséquences de la présence excessive de dépôts sont en particulier l'augmentation de la consommation de carburant et les problèmes de maniabilité.

De plus, les solutions actuellement disponibles visent essentiellement la prévention des dépôts (effet « keep clean »), et il existe relativement peu de solutions qui permettent de nettoyer les parties internes de moteurs qui sont déjà encrassées notamment du fait de l'utilisation de carburants dont les propriétés détergentes sont insuffisantes par exemple en raison de la trop faible teneur ou des performances médiocres des additifs détergents présents dans ces carburants.

Or, non seulement la prévention mais également la réduction des dépôts dans les moteurs sont essentielles pour un fonctionnement optimal des moteurs diesels actuels.

De plus, il serait souhaitable de pouvoir disposer de solutions alternatives à l'emploi d'additifs détergents, qui s'avère souvent relativement coûteux et augmente les prix des carburants pour les consommateurs.

Par ailleurs, la plupart des additifs détergents utilisés actuellement ont tendance à dégrader la désémulsion des carburants liquides pour moteurs à combustion interne, en particulier des gazoles. De manière connue en soi, de par les procédés mis en oeuvre pour l'extraction du pétrole brut mais aussi en raison de la condensation d'eau au sein du carburant froid lors de son transport et de son stockage, les carburants comprennent une quantité variable d'eau pouvant aller de quelques parties par million à quelques pourcents en masse par rapport à la masse totale du carburant. La présence de cette eau résiduelle aboutit généralement à la formation d'émulsions stables qui, étant en suspension au sein du carburant, sont la cause de nombreux problèmes survenant lors du transport et/ou lors de la combustion de ces carburants. Par exemple, ces émulsions peuvent provoquer l'obstruction des filtres du moteur ou encore accélérer la corrosion du moteur.

De plus, l'emploi en quantité substantielle d'additifs détergents est susceptible de dégrader les caractéristiques de lubrifiance de la composition de carburant.

Il existe donc un besoin de proposer de nouvelles solutions pour nettoyer efficacement les dépôts présents dans les moteurs diesels encrassés, qui permettent de réduire la quantité d'additifs détergents utilisés, voire de se passer entièrement de tels additifs.

Ces solutions doivent permettre de rétablir un fonctionnement optimal des moteurs moteur à allumage par compression quelle que soit la technologie du moteur, y compris pour les nouvelles technologies moteur telles que l'injection directe Diesel.

Ces solutions doivent pouvoir être utilisées de manière universelle, c'est-à-dire tant pour les moteurs de véhicules routiers (notamment les véhicules automobiles et les poids lourds tels que par exemple les camions, les bennes à ordures, les bus et cars) que pour les moteurs de véhicules et engins non routiers (notamment les engins destinés aux chantiers et/ou aux travaux publics tels que les buldozers, les camions tout terrain ; les engins de manutention ; les tracteurs et machines agricoles; les bateaux ; les locomotives, etc...).

La demande de brevet WO 2016/107889 décrit l'utilisation d'au moins un alcane en C₇-C₃₀ dans une composition de carburant diesel pour réduire les dépôts sur les injecteurs de carburant.

Ces alcanes sont ajoutés au carburant en quantité variable, en général de quelques pourcents, afin de réduire le caractère encrassant du carburant, c'est-à-dire pour un effet de prévention des dépôts sur les injecteurs (effet de type « keep clean »). Ce document ne concerne pas le problème de réduire les dépôts déjà présents sur les injecteurs, c'est-à-dire de nettoyer des injecteurs encrassés.

Le document WO 03/091364 A2 décrit l'utilisation de coupes gazoles issues de la synthèse Fischer-Tropsch dans des compositions de carburant diesel afin de réduire les dépôts dans les moteurs diesels.

### OBJET DE L'INVENTION

La Demanderesse a maintenant découvert que l'utilisation d'une composition de carburant particulière, telle que définie ci-après, permettait de remédier de manière efficace aux problèmes précités, et notamment de réduire les dépôts présents dans les parties internes d'un moteur à allumage par compression (effet dit « clean up »).

Ainsi, la présente invention a pour objet l'utilisation, pour réduire les dépôts présents dans les parties internes d'un moteur à allumage par compression, d'une composition de carburant comprenant au moins 85% en poids d'une ou plusieurs coupes d'hydrocarbures paraffiniques constituée(s) d'une ou plusieurs huile(s) végétale(s) hydrotraitée(s), ladite (lesdites) coupe(s) ayant une gamme de distillation comprise dans la gamme allant de 100 à 400°C, une teneur en paraffines supérieure ou égale à 90% en poids, et contenant au moins 70% en poids d'iso-paraffines, par rapport au poids de ladite coupe.

De manière surprenante, a Demanderesse a constaté que l'utilisation d'une telle composition dans un moteur diesel encrassé permettait de nettoyer celui-ci, c'est-à-dire l'éliminer de manière très importante l'encrassement généré par l'utilisation préalable de carburants diesels classiques.

Cet effet « clean up » est obtenu y compris en l'absence de tout additif détergent dans la composition. Il est donc possible de formuler des compositions de carburant soit totalement dépourvues d'additif détergent, soit dont la teneur en additif détergent est réduite par rapport à des compositions de gazole classique.

De plus, les compositions selon l'invention présentent l'avantage d'avoir de très bonnes propriétés intrinsèques, et notamment un faible niveau de moussage et de désémulsion, un bon indice de cétane, une bonne tenue à froid dans le cas de coupes riches en iso-paraffines (température limite de filtrabilité et point d'écoulement). Ainsi, l'utilisation d'une telle composition permet de limiter voire d'éviter entièrement l'emploi d'additifs pour améliorer les propriétés ci-avant.

La composition selon l'invention peut être directement employée comme carburant dans les véhicules et engins équipés d'un moteur diesel, y compris les moteurs les plus perfectionnés tels que les moteurs diesels à injection directe à très haute pression.

Les avantages additionnels associés à l'utilisation de la composition de carburant selon l'invention sont :
- un fonctionnement optimal du moteur,
- une réduction de la consommation massique de carburant,
- des émissions de CO₂ et de polluants réduites, et
- une économie due à moins d'entretien du moteur.

Selon un premier mode de réalisation préféré, la composition comprend en outre au moins un premier additif constitué d'un sel d'ammonium quaternaire, obtenu par réaction avec un agent de quaternarisation d'un composé azoté comprenant une fonction amine tertiaire, ce composé étant le produit de la réaction d'un agent d'acylation substitué par un groupement hydrocarboné et d'un composé comprenant au moins un groupement amine tertiaire et au moins un groupement choisi parmi les amines primaires, les amines secondaires et les alcools.

Selon un second mode de réalisation préféré, la composition comprend en outre au moins un second additif constitué d'un agent anti-oxydant choisi parmi les composés comprenant un groupement phénol.

Selon un troisième mode de réalisation particulièrement préféré, la composition contient lesdits premiers et seconds additifs ci-avant.

La composition de carburant selon les trois modes de réalisation ci-avant présente en outre d'excellentes performances anti-corrosion, et son utilisation permet d'éviter les phénomènes de corrosion tant en présence d'eau douce que d'eau salée. Elle présente également un excellent niveau de stabilité et notamment une bonne stabilité au stockage, une bonne stabilité thermique, et de manière plus générale une bonne résistance à l'oxydation.

La présente invention a également pour objet une méthode de nettoyage des dépôts présents dans les parties internes d'un moteur à allumage par compression, consistant à effectuer la combustion dans ledit moteur d'une composition de carburant telle que définie dans la présente demande.

D'autres objets, caractéristiques, aspects et avantages de l'invention apparaîtront encore plus clairement à la lecture de la description et des exemples qui suivent.

Dans ce qui va suivre, et à moins d'une autre indication, les bornes d'un domaine de valeurs sont comprises dans ce domaine, notamment dans les expressions « compris entre » et « allant de ... à ... ».
Par ailleurs, les expressions « au moins un » et « au moins » utilisées dans la présente description sont respectivement équivalentes aux expressions « un ou plusieurs » et « supérieur ou égal ».
Enfin, de manière connue en soi, on désigne par composé ou groupe en C_{N} un composé ou un groupe contenant dans sa structure chimique N atomes de carbone.

### DESCRIPTION DETAILLEE

### La coupe d'hydrocarbures paraffiniques

La composition utilisée conformément à la présente invention comprend une ou plusieurs coupes d'hydrocarbures ayant une gamme de distillation comprise dans la gamme allant de 100 à 400°C et ayant une teneur en paraffines supérieure ou égale à 90% en poids, et contenant au moins 70% en poids d'iso-paraffines, par rapport au poids de ladite coupe, ci-après dénommée « coupe d'hydrocarbures paraffiniques ».

La gamme de distillation de ladite coupe d'hydrocarbures paraffiniques est déterminée conformément à la norme NF EN ISO 3405. De préférence, elle est comprise dans la gamme allant de 130 à 350°C, et plus préférentiellement de 150 à 320°C.

La teneur en paraffines de cette coupe est supérieure ou égale à 90% en poids, de préférence supérieure ou égale à 95% en poids, plus préférentiellement encore supérieure ou égale à 99% en poids, mieux encore supérieure ou égale à 99,5% en poids, et mieux encore supérieure ou égale à 99,9% en poids, par rapport au poids total de ladite coupe.

Par « paraffines » on désigne de manière connue en soi, les alcanes ramifiés (également dénommés iso-paraffines ou iso-alcanes) et les alcanes non ramifiés (également dénommés n-paraffines ou n-alcanes).

Les paraffines présentes dans la ou les coupes d'hydrocarbures paraffiniques selon l'invention comprennent avantageusement de 10 à 20 atomes de carbone. De préférence, elles sont constituées à au moins 60% en poids, plus préférentiellement à au moins 80% en poids et mieux encore à au moins 90% en poids de paraffines comprenant de 12 à 18 atomes de carbone, de préférence de 14 à 18 atomes de carbone, et encore plus préférentiellement de 15 à 18 atomes de carbone.

La ou les coupes d'hydrocarbures paraffiniques utilisées dans la composition selon l'invention contiennent au moins 70% en poids d'iso-paraffines, par rapport à leur poids total. Selon un mode de réalisation particulièrement préféré, elles contiennent au moins 90% en poids d'iso-paraffines.

La ou les coupes d'hydrocarbures paraffiniques présentent une teneur en composés aromatiques de préférence inférieure ou égale à 10000 ppm en poids, plus préférentiellement inférieure ou égale à 1500 ppm en poids, encore plus préférentiellement inférieure ou égale à 1000 ppm en poids.

Leur teneur en composés naphténiques est de préférence inférieure ou égale à 20000 ppm en poids, plus préférentiellement inférieure ou égale à 10000 ppm en poids, et mieux encore inférieure ou égale à 1500 ppm en poids.

Leur teneur en soufre est avantageusement inférieure ou égale à 10 ppm en poids, et mieux encore inférieure ou égale à 5 ppm en poids. De manière particulièrement préférée, cette coupe est totalement exempte de soufre.

La ou les coupes d'hydrocarbures paraffiniques employées dans la présente invention sont des huiles végétales hydrotraitées, également connues sous l'appellation HVO (de l'anglais « hydrotreated vegetable oils »). Il s'agit d'huiles d'origine végétale qui ont subi des traitements successifs incluant un hydrotraitement puis une éventuelle isomérisation.

Des exemples de matières premières végétales appropriées comprennent l'huile de colza, l'huile de canola, l'huile de tournesol, l'huile de soja, l'huile de chanvre, l'huile d'olive, l'huile de lin, l'huile de moutarde, l'huile de palme, l'huile de ricin, l'huile de coco.

Les demandes de brevet WO2016/185046 et WO2016/185047 décrivent des huiles végétales hydrotraitées et leur préparation, qui constituent des exemples de coupes d'hydrocarbures iso-paraffiniques particulièrement appropriées pour les compositions objet de la présente invention.

La composition utilisée conformément à la présente invention comprend au moins 85% en poids d'une ou plusieurs coupes d'hydrocarbures paraffiniques telles que décrites ci-avant. De préférence, elle contient au moins 90% en poids d'une ou plusieurs coupes d'hydrocarbures paraffiniques, plus préférentiellement au moins 93% en poids.

Selon un mode de réalisation, la composition contient au moins 95% en poids, de préférence au moins 99% en poids, et mieux encore au moins 99,5% en poids d'une ou plusieurs coupes d'hydrocarbures paraffiniques telles que décrites ci-avant.

### Le premier additif (sel d'ammonium quaternaire), optionnel :

De préférence, la composition de carburant utilisée conformément à la présente invention comprend en outre un additif (ci-après dénommé « premier additif ») constitué d'un sel d'ammonium quaternaire, obtenu par réaction avec un agent de quaternarisation d'un composé azoté comprenant une fonction amine tertiaire, ce composé azoté étant le produit de la réaction d'un agent d'acylation substitué par un groupement hydrocarboné et d'un composé comprenant au moins un groupement amine tertiaire et au moins un groupement choisi parmi les amines primaires, les amines secondaires et les alcools.

Ledit composé azoté est le produit de la réaction d'un agent d'acylation substitué par un groupement hydrocarboné et d'un composé comprenant à la fois un atome d'oxygène ou un atome d'azote capable de se condenser avec ledit agent d'acylation et un groupement amine tertiaire.

L'agent d'acylation est, avantageusement, choisi parmi les acides mono-ou poly-carboxyliques et leurs dérivés, notamment leurs dérivés ester, amides ou anhydrides. L'agent d'acylation est préférentiellement choisi parmi les acides succiniques, phtaliques et propioniques et les anhydrides correspondants.

L'agent d'acylation est substitué par un groupement hydrocarboné. On entend par groupement "hydrocarboné", tout groupement ayant un atome de carbone directement fixé au reste de la molécule (ie à l'agent d'acylation) et ayant principalement un caractère hydrocarboné aliphatique.

Des groupements hydrocarbonés selon l'invention peuvent également contenir des groupements non hydrocarbonés. Par exemple, ils peuvent contenir jusqu'à un groupement non-hydrocarboné pour dix atomes de carbone à condition que le groupement non-hydrocarboné ne modifie pas de façon significative le caractère principalement hydrocarboné du groupement. On peut citer à titre d'exemple de tels groupements bien connus de l'homme de l'art, les groupements hydroxyle, les halogènes (en particulier les groupements chloro- et fluoro-), les groupements alcoxy, alkylmercapto, alkyle sulfoxy.

On préférera néanmoins les substituants hydrocarbonés ne contenant pas de tels groupements non-hydrocarbonés et ayant un caractère purement d'hydrocarbure aliphatique.

Le substituant hydrocarboné de l'agent d'acylation comprend, de préférence, au moins 8, de préférence, au moins 12 atomes de carbone. Ledit substituant hydrocarboné peut comprendre jusqu'à environ 200 atomes de carbone.

Le substituant hydrocarboné de l'agent d'acylation a, de préférence, une masse moléculaire moyenne en nombre (Mn) comprise entre 170 à 2800, par exemple entre 250 à 1500, plus préférentiellement entre 500 à 1500 et, encore plus préférentiellement entre de 500 à 1100. Une gamme de valeur de Mₙ comprise entre 700 et 1300 est particulièrement préférée, par exemple de 700 à 1000.

A titre d'exemple de groupements hydrocarbonés substituant l'agent d'acylation, on peut citer les groupements n-octyle, n-décyle, n-dodécyle, tétrapropényle, n-octadécyle, oléyle, octadecyle ou triacontyle.

Le substituant hydrocarboné de l'agent d'acylation peut également être obtenu à partir d'homo- ou d'inter-polymères (par exemple de copolymères, terpolymères) de mono-et di-oléfines ayant de 2 à 10 atomes de carbone, par exemple à partir d'éthylène, de propylène, de 1-butène, d'isobutène, de butadiène, d'isoprène, de 1-hexène ou de 1-octène. De préférence, ces oléfines sont des 1-mono-oléfines.

Le substituant hydrocarboné de l'agent d'acylation peut également être choisi parmi les dérivés d'analogues halogénés (par exemple chlorés ou bromés) de ces homo-ou inter-polymères.

Selon une variante, le substituant hydrocarboné de l'agent d'acylation peut être obtenu à partir d'autres sources, par exemple à partir de monomères d'alcènes à haut poids moléculaire (par exemple, 1-tétracontène) et leurs analogues chlorés ou hydrochlorés, de fractions de pétrole aliphatiques, par exemple les cires de paraffine, leurs analogues craqués, chlorés et/ou hydrochlorés, d'huiles blanches, d'alcènes synthétiques, par exemple produits par procédé Ziegler-Natta (par exemple les graisses de polyéthylène) et d'autres sources connues de l'homme de l'art.

Toute insaturation présente dans le groupement hydrocarboné de l'agent d'acylation peut éventuellement être réduite ou éliminée par hydrogénation selon tout procédé connu.

Le substituant hydrocarboné de l'agent d'acylation est, de préférence, essentiellement saturé, c'est-à-dire qu'il ne contient pas plus d'une liaison insaturée carbone-carbone pour chaque tranche de dix liaisons simples carbone-carbone présentes.

Le substituant hydrocarboné de l'agent d'acylation ne contient, avantageusement, pas plus d'une liaison insaturée carbone-carbone non-aromatique tous les 50 liaisons carbone-carbone présentes.

Selon un mode de réalisation préféré, le substituant hydrocarboné de l'agent d'acylation est un groupement polyisobutène (PIB). On préfère tout particulièrement les polyisobutènes (PIB) dits hautement réactifs. On entend par polyisobutènes (PIB) hautement réactifs des polyisobutènes (PIB) dans lesquels au moins 50% en moles, de préférence au moins 70% en moles ou plus, des doubles liaisons oléfiniques terminales sont du type vinylidène comme décrit dans le document EP0565285. En particulier, les PIB préférés sont ceux ayant plus de 80% en moles et jusqu'à 100% en moles de groupements terminaux vinylidène tel que décrits dans le document EP1344785.

Selon un mode de réalisation particulièrement préféré, l'agent d'acylation substitué par un groupement hydrocarbyle est un anhydride polyisobutényl-succinique (PIBSA).

La préparation d'anhydrides polyisobutényl-succiniques est connue en soi, et largement décrite dans la littérature. On peut citer à titre d'exemple les procédés comprenant la réaction entre des polyisobutènes (PIB) et de l'anhydride maléique décrits dans les documents US3361673 et US3018250 ou le procédé comprenant la réaction d'un polyisobutène (PIB) halogéné, en particulier chloré, avec de l'anhydride maléique (US3 172892).

Selon une variante, l'anhydride polyisobutényl-succinique peut être préparé en mélangeant une polyoléfine avec de l'anhydride maléique puis en passant du chlore à travers le mélange (GB949981).

D'autres groupements hydrocarbonés comprenant une oléfine interne, par exemple tels que ceux décrits dans la demande WO2007/015080, peuvent également être utilisés comme substituant de l'agent d'acylation. On entend par oléfine interne, toute oléfine contenant principalement une double liaison non-alpha, qui est une oléfine bêta ou de position supérieure.

De préférence, ces matériaux sont essentiellement des bêta-oléfines ou des oléfines de position supérieure, par exemple contenant moins de 10% massique d'alpha-oléfine, de manière avantageuse moins de 5% massique ou moins de 2% massique.

Les oléfines internes peuvent être préparées par isomérisation d'alpha-oléfines selon tout procédé connu.

Le composé comprenant à la fois un atome d'oxygène ou un atome d'azote capable de se condenser avec l'agent d'acylation et un groupement amine tertiaire peut, par exemple, être choisi parmi le groupe consistant en : la N,N- diméthylaminopropylamine, la N,N-diéthylaminopropylamine, la N, N- diméthylamino- éthylamine. Ledit composé peut en outre être choisi parmi les composés hétérocycliques substitués par des alkylamines tels que la 1-(3-aminopropyl)-imidazole et 4-(3-aminopropyl)morpholine, 1-(2-aminoéthyl)pipéridine, la 3,3-diamino-N-methyldipropylamine, et le 3'3-bisamino(N,N-diméthylpropylamine).

Le composé comprenant à la fois un atome d'oxygène ou un atome d'azote capable de se condenser avec l'agent d'acylation et un groupement amine tertiaire peut également être choisi parmi les alcanolamines, y compris, mais sans s'y limiter, la triéthanolamine, la triméthanolamine, le N,N-diméthylaminopropanol, le N,N-diméthylaminoéthanol, N,N-diéthylaminopropanol, le N,N-diéthylaminoéthanol, N,N-diethylaminobutanol, la N,N,N-tris(hydroxyéthyl)amine, la N,N,N- tris(hydroxyméthyl)amine, la N,N,N tris(aminoéthyl)amine, la N,N-dibutylaminopropylamine et le N,N,N'-triméthyl-N'-hydroxyéthyl-bisaminoéthyléther, la N,N-bis(3-diméthylamino-propyl)-N-isopropanol amine, la N-(3-diméthylamino-propyl)-N,N-diisopropanolamine, la N'-(3-(Diméthylamino)propyl)-N,N-diméthyl-1,3- propanediamine; le 2-(2-diméthylaminoéthoxy)éthanol et la N,N,N'-triméthylaminoéthyléthanolamine,

Selon un mode de réalisation préféré, ledit composé comprenant au moins un groupement amine tertiaire et au moins un groupement choisi parmi les amines primaires, les amines secondaires et les alcools est choisi parmi les amines de formule (I) ou (II) suivantes : 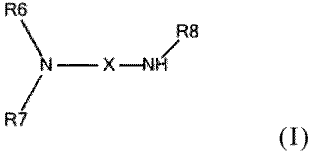 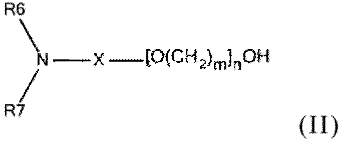 dans lesquelles :
R6 et R7 sont identiques ou différents et représentent, indépendamment l'un de l'autre, un groupement alkyle ayant de 1 à 22 atomes de carbone;
X est un groupement alkylène ayant de 1 à 20 atomes de carbone ;
m est un nombre entier compris entre 1 et 5 ;
n est un nombre entier compris entre 0 et 20 ; et
R8 est un atome d'hydrogène ou un groupement alkyle de C1 à C22.

Lorsque le composé azoté comprend une amine de formule (I), R8 est avantageusement un atome d'hydrogène ou un groupement alkyle en C1 à C16, de préférence un groupement alkyle en C1 à C10, encore plus préférentiellement un groupement alkyle en C1 à C6. R8 peut, par exemple, être choisi parmi le groupe consistant en l'hydrogène, méthyle, éthyle, propyle, butyle and leurs isomères. De manière préférée R8 est un atome d'hydrogène.

Lorsque le composé azoté comprend une amine de formule (II), m est de préférence égal à 2 ou 3, plus préférentiellement égal à 2 ; n est de préférence un entier compris entre 0 à 15, plus préférentiellement entre 0 à 10, encore plus préférentiellement entre 0 à 5. Avantageusement, n vaut 0.

Selon un mode de réalisation préférentiel, ledit composé azoté est le produit de la réaction de l'agent d'acylation substitué par un groupement hydrocarboné et d'une diamine de formule (I).

Dans ce mode de réalisation :
- R6 et R7 peuvent représenter, indépendamment l'un de l'autre, un groupement alkyle en C1 à C16, de préférence un groupement alkyle en C1 à C10 ;
- R6 et R7 peuvent représenter, indépendamment l'un de l'autre, un groupement méthyle, éthyle, propyle, butyle, pentyle, hexyle, heptyle, octyle ou leurs isomères. Avantageusement, R6 et R7 représentent indépendamment l'un de l'autre, un groupement en C1 à C4, de préférence un groupement méthyle ;
- X représente un groupement alkylène ayant 1 à 16 atomes de carbone, de préférence de 1 à 12 atomes de carbone, plus préférentiellement de 1 à 8 atomes de carbone, par exemple de 2 à 6 atomes de carbone ou de 2 à 5 atomes de carbone. X représente de manière particulièrement préférée un groupement éthylène, propylène ou butylène, en particulier un groupe propylène.

Selon un mode de réalisation particulièrement préféré, le composé azoté est le produit de réaction d'un dérivé d'acide succinique substitué par un groupement hydrocarboné, de préférence un anhydride polyisobutényl-succinique, et d'un alcool ou d'une amine comportant également un groupe amine tertiaire, notamment un composé de formule (I) ou (II) telle que décrite ci-avant et plus préférentiellement un composé de formule (I).

Selon une première variante, le dérivé d'acide succinique substitué par un groupement hydrocarboné réagit avec l'amine comprenant également un groupement amine tertiaire sous certaines conditions pour former un succinimide (forme fermée). La réaction du dérivé d'acide succinique et de l'amine peut également aboutir sous certaines conditions à un succinamide c'est-à-dire, un composé comprenant un groupe amide et un groupe acide carboxylique (forme ouverte).

Selon une seconde variante, un alcool comprenant également un groupement amine tertiaire réagit avec le dérivé de l'acide succinique pour former un ester comprenant également un groupement carboxyle - CO₂H libre (forme ouverte). Ainsi, dans certains modes de réalisation le composé azoté peut être le produit de réaction d'un dérivé d'acide succinique et d'une amine ou un alcool qui est un ester ou un amide et qui comprend en outre également un groupement carboxyle -CO2H n'ayant pas réagi (forme ouverte).

Le sel d'ammonium quaternaire formant le deuxième additif selon la présente invention est directement obtenu par réaction entre le composé azoté décrit ci-dessus comprenant une fonction amine tertiaire et un agent de quaternarisation.

Selon un mode de réalisation particulier, l'agent de quaternarisation est choisi parmi le groupe constituant en les dialkyle sulfates, les esters d'acide carboxylique; les halogénures d'alkyle, les halogénures de benzyle, les carbonates hydrocarbonés, et les époxydes hydrocarbonés éventuellement en mélange avec un acide, seuls ou en mélange.

Pour les applications de carburant, il est souvent souhaitable de réduire la teneur en halogène, soufre et les composés contenant du phosphore.

Ainsi, si un agent de quaternarisation contenant un tel élément est utilisé, il peut être avantageux d'effectuer une réaction ultérieure pour échanger le contre-ion. Par exemple, un sel d'ammonium quaternaire formé par réaction avec un halogénure d'alkyle peut ensuite être mis en réaction avec de l'hydroxyde de sodium et le sel d'halogénure de sodium éliminé par filtration.

L'agent de quaternarisation peut comprendre des halogénures tels que les chlorure, iodure ou bromure; des hydroxydes; des sulfonates; des bisulfites; des alkylsulfates tels que le sulfate de diméthyle; des sulfones; des phosphates; des alkylphosphates en C1-C12_{;} des dialkylphosphates en C1-C12; des borates; des alkylborates en C1-C12; des nitrites; des nitrates; des carbonates; des bicarbonates; des alcanoates; les O,O-dialkyldithiophosphates en C1-C12, seuls ou en mélange.

Selon un mode de réalisation particulier, l'agent de quaternarisation peut être choisi parmi les dérivés de dialkylsulfates tels que le sulfate de diméthyle, de N-oxydes, de sulfones tels que le propane- et butane- sulfone, d'halogénures d'alkyle, d'acyle ou d'aralkyle tels que le chlorure de méthyle et éthyle, le bromure, iodure ou chlorure de benzyle, et les carbonates hydrocarbonés (ou alkylcarbonates).

Si l'halogénure d'acyle est le chlorure de benzyle, le noyau aromatique est éventuellement substitué par un ou plusieurs groupements alkyle ou alcényle.

Les groupements hydrocarbonés (alkyles) des carbonates hydrocarbonés peuvent contenir de 1 à 50, de 1 à 20, de 1 à 10 ou 1 à 5 atomes de carbone par groupement. Selon un mode de réalisation, les carbonates hydrocarbonés contiennent deux groupements hydrocarbonés qui peuvent être identiques ou différents. A titre d'exemple de carbonates hydrocarbonés, on peut citer le carbonate de diméthyle ou de diéthyle.

Selon un mode de réalisation préféré, l'agent de quaternarisation est choisi parmi les époxydes hydrocarbonés représentés par la formule (III) suivante: 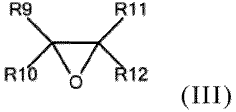 dans laquelle R9, R10, R11 et R12 peuvent être identiques ou différentes et représentent indépendamment les uns des autres un atome d'hydrogène ou un groupement hydrocarboné en C₁ à C₅₀. A titre d'exemple non limitatif, on peut citer l'oxyde de styrène, l'oxyde d'éthylène, l'oxyde de propylène, l'oxyde de butylène, l'oxyde de stilbène et les époxydes en en C₁ à C₅₀. L'oxyde de styrène et l'oxyde de propylène sont particulièrement préférés.

De tels époxydes hydrocarbonés peuvent être utilisés comme agent de quaternarisation en combinaison avec un acide, par exemple avec l'acide acétique. Les époxydes hydrocarbonés peuvent également être utilisés seuls comme agent de quaternarisation, notamment sans acide supplémentaire. Sans être lié par cette hypothèse, il semblerait que la présence de la fonction acide carboxylique dans la molécule favorise la formation du sel d'ammonium quaternaire. Dans un tel mode de réalisation n'utilisant pas acide supplémentaire, un solvant protique est utilisé pour la préparation du sel d'ammonium quaternaire. A titre d'exemple, les solvants protiques comme l'eau, les alcools (y compris les alcools polyhydriques) peuvent être utilisés seul ou en mélange. Les solvants protiques préférés ont une constante diélectrique supérieure à 9.

Des sels d'ammonium quaternaire correspondants préparés à partir d'amides ou esters et des dérivés d'acide succinique sont décrits dans WO2010/132259.

Selon un autre mode de réalisation, l'agent de quaternarisation est choisi parmi les composés de formule (IV): 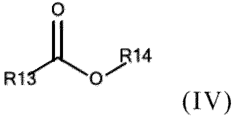 dans laquelle R13 est un groupement alkyle, alcényle, aryle et aralkyle éventuellement substitué, et R14 est un groupement alkyle, aryle ou alkylaryle en C₁ à C₂₂.

Le composé de formule (IV) est un ester d'acide carboxylique apte à réagir avec une amine tertiaire pour former un sel d'ammonium quaternaire. Des composés de formule (IV) sont choisis, par exemple parmi les esters d'acides carboxyliques ayant un pKa de 3,5 ou moins. Le composé de formule (IV) est, de préférence, choisi parmi les esters d'acide carboxylique aromatique substitué, d'acide alpha-hydroxycarboxylique et d'acide polycarboxylique.

Selon un mode de réalisation, l'ester est un ester d'acide carboxylique aromatique substitué de formule (IV) dans laquelle R13 est un groupement aryle substitué. De préférence, R13 est un groupement aryle substitué ayant 6 à 10 atomes de carbone, de préférence un groupement phényle ou naphtyle, plus préférentiellement un groupement phényle. R13 est avantageusement substitué par un ou plusieurs groupements choisis parmi les radicaux carboalcoxy, nitro, cyano, hydroxy, SR₁₅ et NR₁₅R₁₆.Chacun des groupements R₁₅ et R₁₆ peut être un atome d'hydrogène ou un groupement alkyle, alcényle, aryle ou carboalcoxy éventuellement substitué. Chacun des groupements R₁₅ et R₁₆ représente, avantageusement, l'atome d'hydrogène ou un groupement alkyle en C1 à C22 éventuellement substitué, de préférence l'atome d'hydrogène ou un groupement alkyle en C1 à C16, plus préférentiellement l'atome d'hydrogène ou un groupement alkyle en C1 à C10, encore plus préférentiellement l'atome d'hydrogène ou un groupement alkyle en C1 à C4. R₁₅ est de préférence un atome d'hydrogène et R₁₆ un atome d'hydrogène ou un groupement en C1 à C4. Avantageusement, R₁₅ et R₁₆ sont tous les deux un atome d'hydrogène.

Selon un mode de réalisation, R13 est un groupe aryle substitué par un ou plusieurs groupements choisis parmi les radicaux hydroxyle, carboalcoxy, nitro, cyano et NH₂. R13 peut être un groupement aryle polysubstitué, par exemple trihydroxyphényle. Avantageusement, R13 est un groupement aryle monosubstitué, de préférence, substitué en ortho. R13 est, par exemple, substitué par un groupement choisi parmi les radicaux OH, NH₂, NO₂ ou COOMe, de préférence OH ou NH₂. R13 est, de préférence, un groupement hydroxy-aryle, en particulier le 2-hydroxyphényle.

Selon un mode de réalisation particulier, R14 est un groupement alkyle ou alkylaryle. R14 peut être un groupement alkyle en C1 à C16, de préférence en C1 à C10, avantageusement en C1 à C8. R14 peut être un groupement alkylaryle en C1 à C16, de préférence en C1 à _{C10}, avantageusement en C1 à C8. R14 peut par exemple être choisi parmi les groupements méthyle, éthyle, propyle, butyle, pentyle, benzyle ou leurs isomères. De préférence, R14 est un groupement benzyle ou méthyle, plus préférentiellement méthyle.

Un composé particulièrement préféré est le salicylate de méthyle.

Selon un mode de réalisation particulier, le composé de formule (IV) est un ester d'un acide alpha-hydroxycarboxylique répondant à la formule (V) suivante : 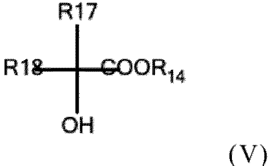 dans laquelle R17 et R18 sont identiques ou différents et sont indépendamment choisis parmi le groupe consistant en l'atome d'hydrogène, les groupements alkyle, alcényle, aryle ou aralkyle. De tels composés sont par exemple décrits dans le document EP 1254889.

Des exemples de composés de formule (IV) dans laquelle R13COO est le résidu d'un acide alpha-hydroxycarboxylique comprennent les méthyl-, éthyl-, propyl-, butyl-,pentyl-, hexyl-, phényl-, benzyl- ou allyl-esters d'acide 2-hydroxy-isobutyrique; les méthyl-, éthyl-, propyl-, butyl-, pentyl-, hexyl-, benzyl-, phényl- ou allyl-esters d'acide 2-hydroxy-2-méthylbutyrique; les méthyl-, éthyl-, propyl-, butyl-, pentyl-, hexyl-, benzyl-, phényl- ou allyl-esters d'acide 2-hydroxy-2-éthylbutyrique; les méthyl-, éthyl-, propyl-, butyl-, pentyl-, hexyl-, benzyl-, phényl- ou allyl-esters d'acide lactique et les méthyl-, éthyl-, propyl-, butyl-, pentyl-, hexyl-, allyl-, benzyl-ou phényl-esters d'acide glycolique. De ce qui précède, le composé préféré est le méthyl-2-hydroxyisobutyrate.

Selon un mode de réalisation particulier, le composé de formule (IV) est un ester d'un acide polycarboxylique choisi parmi les acides dicarboxyliques et les acides carboxyliques ayant plus de deux fonctions acides. Les fonctions carboxyliques sont de préférence toutes sous forme estérifiée. Les esters préférés sont les esters d'alkyle en C1 à C4.

Le composé de formule (IV) peut être choisi parmi les diesters d'acide oxalique, les diesters d'acide phtalique, les diesters d'acide maléique, les diesters d'acide malonique ou les diesters d'acide citrique. De préférence, le composé de formule (IV) est l'oxalate de diméthyle.

Selon une variante préférée, le composé de formule (IV) est un ester d'acide carboxylique ayant un pKa inférieur à 3,5. Pour les cas où le composé comprend plus d'un groupe acide, on se référera à la première constante de dissociation.

Le composé de formule (IV) peut être choisi parmi un ou plusieurs esters d'acide carboxylique choisi parmi l'acide oxalique, l'acide phtalique, l'acide salicylique, l'acide maléique, l'acide malonique, l'acide citrique, l'acide nitrobenzoïque, l'acide aminobenzoïque et le 2,4,6-acide trihydroxybenzoïque. Les composés préférés de formule (IV) sont l'oxalate de diméthyle, le 2-nitrobenzoate de méthyle et le salicylate de méthyle.

Selon un mode de réalisation particulièrement préféré, le sel d'ammonium quaternaire employé dans l'invention est formé par réaction d'un époxyde hydrocarboné, de préférence choisi parmi ceux de formule (III) ci-avant et plus préférentiellement l'oxyde de propylène, avec le produit de la réaction d'un anhydride polyisobutényl-succinique dont le groupement polyisobutylène (PIB) a une masse moléculaire moyenne en nombre (Mn) comprise entre 700 et 1000 et de la diméthyl-aminopropylamine.

La composition de carburant utilisée selon l'invention peut avantageusement comprendre le ou les premiers additifs tels que décrits ci-avant à une teneur préférentielle allant de 5 à 1000 ppm, de préférence de 10 à 500 ppm, et plus préférentiellement de 50 à 200 ppm en poids, par rapport au poids total de la composition.

### Le second additif (agent anti-oxydant phénolique), optionnel :

De préférence, la composition de carburant utilisée conformément à la présente invention comprend en outre un additif (ci-après dénommé « second additif ») constitué d'un agent anti-oxydant choisi parmi les composés comprenant dans leur structure un groupement phénol.

La dénomination « second additif » est employée dans la présente demande uniquement aux fins de différencier celui-ci du premier additif décrit ci-avant. Cette expression ne doit pas être interprétée de manière limitative, comme signifiant que la composition contenant ledit second additif contient obligatoirement aussi ledit premier additif. En d'autres termes, la composition utilisée conformément à la présente invention peut contenir l'un et/ou l'autre desdits premier et second additifs.

Selon un mode de réalisation particulièrement préférés, la composition de carburant contient au moins un premier et au moins un second additif tels que décrits dans la présente demande.

Des agents anti-oxydants utilisables comme second additif sont choisis parmi le di-t-butyl-2,6 méthyl-4 phénol (BHT), la t-butyl hydroquinone (TBHQ), le 2,6 et le 2,4 di-t-butyl phénol, le 2,4-diméthyl-6-t-butyl phénol, le pyrogallol, le tocophérol, le 4,4'-méthylène bis (2,6-di-t-butyl phénol) (N° CAS 1 18-82-1), seuls ou en mélange.

Les agents anti-oxydants particulièrement préférés sont choisis parmi les alkyl-phénols tel qu'en particulier le di-t-butyl-2,6 méthyl-4 phénol (BHT).

La composition de carburant utilisée selon l'invention peut avantageusement comprendre le ou les seconds additifs tels que décrits ci-avant à une teneur préférentielle allant de 2 à 500 ppm, de préférence de 5 à 250 ppm, et plus préférentiellement de 10 à 150 ppm en poids, par rapport au poids total de la composition.

### Les autres additifs :

La composition de carburant utilisée conformément à la présente invention peut également comprendre un ou plusieurs additifs additionnels, différents des premiers et seconds additifs tels que décrits ci-avant.

Selon un mode de réalisation préféré, la composition comprend en outre un ou plusieurs agents anti-oxydants aminés, qui peuvent être notamment choisis parmi les amines aliphatiques, cycloaliphatiques et aromatiques. La dicyclohexylamine est particulièrement préférée.

Le ou les agents anti-oxydants aminés peuvent être présents en une teneur allant de 0,2 à 50 ppm, de préférence de 0,5 à 25 ppm, et plus préférentiellement de 1 à 20 ppm en poids, par rapport au poids total de la composition.

Selon un autre mode de réalisation préféré, la composition comprend en outre un ou plusieurs agents passivateurs de métaux, choisis parmi les dérivés du triazole, seuls ou en mélange.

On entend par « dérivés du triazole », l'ensemble des composés comprenant un motif triazole, c'est-à-dire un motif cyclique aromatique à 5 chaînons, comportant deux doubles liaisons et 3 atomes d'azote. Selon la position des atomes d'azote, on distingue les motifs 1,2,3-triazoles (appelées V- triazoles) et les motifs 1,2,4-triazoles (appelées S-triazoles). A titre d'exemple de motifs triazole, on peut citer le benzotriazole ou le tolyltriazole.

Le ou les agents passivateurs de métaux sont de préférence choisis parmi les amines substituées par des groupements triazole, seules ou en mélange. On entend par « groupement triazole » tout substituant contenant un motif triazole tel que défini ci-dessus.

Le ou les agents passivateurs de métaux sont plus préférentiellement choisis parmi la N,N-bis(2-éthylhexyl)-[(1,2,4-triazol-1-yl)méthyl]amine (CAS 91273-04-0) et la N,N'-bis- (2 éthylhexyl)-4-méthyl-1H-benzotriazole amine (CAS 80584-90-3), seules ou en mélange.

On peut également citer et les agents passivateurs décrits en page 5 de la demande US2006/0272597.

Le ou les agents passivateurs de métaux peuvent être présents en une teneur allant de 0,2 à 50 ppm, de préférence de 0,5 à 25 ppm, et plus préférentiellement de 1 à 15 ppm en poids, par rapport au poids total de la composition.

Selon un autre mode de réalisation préféré, la composition comprend en outre un ou plusieurs agents chélatants (ou agents séquestrants de métaux), qui peuvent être notamment choisis parmi les amines substituées par des groupements N,N'-disalicylidène, tels que le N,N'-disalicylidène 1,2-diaminopropane (DMD).

Le ou les agents chélatants peuvent être présents en une teneur allant de 0,1 à 100 ppm, de préférence de 0,2 à 50 ppm, et plus préférentiellement de 0,5 à 20 ppm en poids, encore plus préférentiellement de 0,5 à 10 ppm en poids, par rapport au poids total de la composition.

La composition selon l'invention peut également comprendre un ou plusieurs autres additifs couramment utilisés dans les carburants, différents des additifs décrits précédemment.

La composition peut, typiquement, comprendre un ou plusieurs autres additifs choisis parmi les détergents, les agents anti-corrosion, les dispersants, les désémulsifiants, les traceurs, les biocides, les réodorants, les additifs procétane, les modificateurs de friction, les additifs de lubrifiance ou additifs d'onctuosité, les agents d'aide à la combustion (promoteurs catalytiques de combustion de suie), les agents anti-usure et/ou les agents modifiant la conductivité.

Parmi ces additifs, on peut citer en particulier :
a) les additifs procétane, notamment (mais non limitativement) choisis parmi les nitrates d'alkyle, de préférence le nitrate de 2-éthyl hexyle, les peroxydes d'aryle, de préférence le peroxyde de benzyle, et les peroxydes d'alkyle, de préférence le peroxyde de ter-butyle;
b) les additifs de lubrifiance ou agents anti-usure, notamment (mais non limitativement) choisis dans le groupe constitué par les acides gras et leurs dérivés ester ou amide, notamment le monooléate de glycérol, et les dérivés d'acides carboxyliques mono- et polycycliques. Des exemples de tels additifs sont donnés dans les documents suivants: EP680506, EP860494, WO98/04656, EP915944, FR2772783, FR2772784,
c) les additifs désémulsifiants par exemple (mais non limitativement) choisis parmi les résines alkyl phénoliques oxyalkylées (par exemple le composé CAS63428-92-2)
d) les détergents.

Selon un mode de réalisation préféré, la composition comprend au moins un additif détergent choisi parmi les dérivés de triazole de formule (VI) suivante: 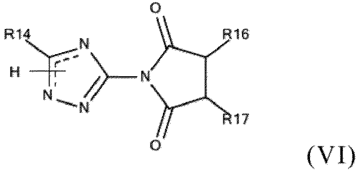 dans laquelle
- R14 est choisi parmi le groupe consistant en un atome d'hydrogène, un groupement hydrocarboné aliphatique en C1 à C8, de préférence en C1 à C4, plus préférentiellement en C1 à C2, linéaire ou ramifié et un groupement carboxyle (-CO2H). De préférence, R14 est un atome d'hydrogène ;
- R16 et R17 sont identiques ou différents et représentent, indépendamment l'un de l'autre, un groupement choisi parmi le groupe consistant en un atome d'hydrogène et un groupement hydrocarboné aliphatique, linéaire ou ramifié, saturé ou insaturé, cyclique ou acyclique ayant de 2 à 200 atomes de carbones, de préférence de 14 et 200 atomes de carbone, plus préférentiellement de 50 à 170 atomes de carbone, encore plus préférentiellement entre 60 et 120 atomes de carbone.

Il est à noter que nous appliquons les règles conventionnelles de représentation (liaison en pointillé et liaison labile) pour indiquer que la position de l'atome d'hydrogène et de la double liaison dans le cycle triazole peut changer, ladite formule couvant ainsi les deux positions possibles.

Selon un mode de réalisation particulier, le dérivé de triazole a la formule (VI) dans laquelle R16 et R17 sont identiques ou différents et représentent, indépendamment l'un de l'autre, un groupement choisi parmi le groupe consistant en un atome d'hydrogène et un groupement hydrocarboné aliphatique ayant une masse moléculaire moyenne en nombre (Mn) comprise entre 200 et 3000, de préférence entre 400 à 3000, plus préférentiellement entre 400 à 2500, encore plus préférentiellement entre 400 et 1500 ou entre 500 à 1500. Ledit groupement hydrocarboné aliphatique est de préférence un groupement polyisobutylène (ou encore appelé polyisobutène noté PIB) ayant une masse moléculaire moyenne en nombre (Mn) comprise entre 200 et 3000, de préférence entre de préférence entre 5 400 à 3000, plus préférentiellement entre 400 à 2500, encore plus préférentiellement entre 400 et 1500 ou entre 500 à 1500. Selon un mode de réalisation particulièrement préféré, R16 et R17 représentent respectivement un atome d'hydrogène et un groupement PIB tel que décrit ci-dessus ou inversement.

Selon un mode de réalisation préféré, la composition utilisée conformément à l'invention ne contient pas d'additif anti-mousse. En effet, les bonnes propriétés intrinsèques de la composition selon l'invention rendent inutile l'ajout d'un tel additif. Pour mémoire, des exemples d'additifs anti-mousse sont notamment (mais non limitativement) les polysiloxanes, les polysiloxanes oxyalkylés, et les amides d'acides gras issus d'huiles végétales ou animales. Des exemples de tels additifs sont donnés dans EP861882, EP663000, EP736590.

### L'utilisation:

Selon la présente invention la composition de carburant telle que décrite ci-avant est utilisée pour réduire les dépôts présents dans les parties internes d'un moteur à allumage par compression (ou moteur Diesel). Il s'agit d'un effet de nettoyage des parties internes encrassées, ou effet dit « clean-up ».

Les parties du moteur désencrassées par l'utilisation de la composition selon l'invention sont avantageusement choisies parmi les suivantes : la chambre de combustion et le système d'injection de carburant.

Les dépôts visés tout particulièrement sont localisés dans le système d'injection du moteur Diesel, de préférence, localisés sur une partie externe d'un injecteur dudit système d'injection, par exemple le nez de l'injecteur et/ou sur une partie interne d'un injecteur dudit système d'injection (IDID en anglais « Internal Diesel Injector Deposits »), par exemple à la surface d'une aiguille d'injecteur.

Les dépôts éliminés par l'utilisation selon l'invention peuvent être de tous types, et en particulier les dépôts liés au phénomène de cokage (« coking » en anglais) et/ou les dépôts de type savon et/ou vernis (en anglais « lacquering »).

L'effet de désencrassement des parties internes des moteurs Diesel induit par l'utilisation selon l'invention peut être évalué par différentes méthodes, bien connues de l'homme du métier. On citera, à titre d'exemple non limitatif, les essais normalisés ou reconnus par la profession ou les méthodes décrites dans la littérature suivants :
- la méthode DW10, méthode d'essai moteur normée CEC F-98-08, consistant à mesurer de la perte de puissance due à la formation des dépôts dans les parties internes d'un moteur Diesel à injection directe ;
- la méthode XUD9, méthode d'essai moteur normée CEC F-23-1-01 Issue 5, consistant à mesurer la restriction de flux de carburant émise par l'injecteur ;
- la méthode décrite par la demanderesse dans la demande WO2014/029770 page 17 à 20, consistant à évaluer des dépôts lacquering (IDID).

Selon un mode de réalisation particulier, l'utilisation selon l'invention permet de réduire la consommation massique de carburant du moteur à combustion interne.

Selon un mode de réalisation particulier, l'utilisation selon l'invention permet de réduire les émissions de polluants, en particulier les émissions de particules du moteur à combustion interne.

La composition selon l'invention peut être utilisée pour nettoyer tout type de moteur diesel, équipant tout véhicule ou engin stationnaire, et par exemple pour nettoyer les moteurs des véhicules suivants : les véhicules légers, les poids lourds (camions de différentes charges dits « medium duty » et « heavy duty », bennes à ordures ménagères, bus, cars...) et les véhicules non routiers (par exemple les engins de chantier ou de/ travaux publics, tracteurs, trains, bateaux).

Selon un mode de réalisation préféré, la composition est utilisée pour nettoyer les parties internes d'un moteur diesel de véhicule automobile, de préférence un moteur Diesel à injection directe (DICI en anglais « Direct Injection Compression Ignition engine »), en particulier un moteur Diesel à système d'injection Common-Rail (CRDI en anglais « Common Rail Direct Injection »).

Les exemples ci-après sont donnés à titre d'illustration de l'invention, et ne sauraient être interprétés de manière à en limiter la portée.

### EXEMPLES

Les exemples ci-après ont été réalisés à partir d'une coupe d'hydrocarbures paraffiniques (ci-après coupe C1) constituée d'une huile végétale hydrotraitée (HVO) dont les caractéristiques sont détaillées dans le tableau I ci-dessous :

**[Tableau I]**

| Caractéristique | Méthode | Valeur |
|---|---|---|
| Masse volumique à 15°C | ISO 12185 | 779,9 kg/m³ |
| Viscosité à 40°C | ISO 3104 | 2,9 mm²/s |
| Point de trouble (PTR)° | ASTM D7346 | -36°C |
| Température limite de filtrabilité (TLF) | EN 116 | -39°C |
| Profil de distillation | ISO 3405 | |
| | Point initial | 216,0°C |
| | Point à 5% vol. | 252,4°C |
| | Point à 10% vol. | 262,1°C |
| | Point à 20% vol. | 269,8°C |
| | Point à 30% vol. | 273,4°C |
| | Point à 40% vol. | 275,7°C |
| | Point à 50% vol. | 277,8°C |
| | Point à 60% vol. | 279,7°C |
| | Point à 70% vol. | 282,1°C |
| | Point à 80% vol. | 285,0°C |
| | Point à 90% vol. | 289,2°C |
| | Point à 95% vol. | 293,0°C |
| | Point final | 304,3°C |
| | Volume distillé | 98,6 ml |
| | Résidu | 1,3 ml |
| | Pertes | 0,1 ml |
| Teneur composés aromatiques | EN12916 | 0% en poids |

Cette coupe d'hydrocarbures est constituée à 99,9% en poids de paraffines, dont 92,6% d'iso-paraffines (ci-après i-paraffines) et 7,3% en poids de n-paraffines.

Sa composition exacte est détaillée dans le tableau II ci-dessous :

**[Tableau II]**

| Nombre d' atomes de C | n-paraffines | i-paraffines | naphtènes | i-naphtènes |
|---|---|---|---|---|
| 7 | 2,35 | 0,39 | | |
| 8 | 0,09 | 0,20 | 0,01 | |
| 9 | 0,16 | 0,43 | | 0,01 |
| 10 | 0,17 | 0,80 | | 0,01 |
| 11 | 0,14 | 0,84 | | |
| 12 | 0,13 | 0,99 | | |
| 13 | 0,15 | 1,02 | | |
| 14 | 0,86 | 1,54 | 0,01 | 0,01 |
| 15 | | 9,55 | 0,01 | 0,05 |
| 16 | 2,43 | 31,15 | | 0,01 |
| 17 | | 14,22 | | |
| 18 | 0,80 | 30,71 | | 0,02 |
| 19 | | 0,23 | | 0,01 |
| 20 | 0,01 | 0,31 | | |
| 21 | | 0,03 | | |
| 22 | | 0,06 | | |
| 23 | | 0,02 | | |
| 24 | | 0,01 | | |
| 27 | | 0,08 | | |
| Total | 7,29 | 92,56 | 0,03 | 0,12 |

Des compositions de carburant C2 et C3 ont été préparées, en ajoutant à la coupe C1 les additifs détaillés dans le tableau III ci-dessous, dans lequel la teneur de chaque additif est indiquée en ppm en poids par rapport au poids total de la composition finale :

**[Tableau III]**

| Additifs ajoutés | Composition C2 | Composition C3 |
|---|---|---|
| Additif 1 : sel d'ammonium quaternaire 1 | 100 | 137 |
| Composition 2 | 0 | 164 |

| | | |
|---|---|---|
| (1) formé par réaction de l'oxyde de propylène avec le produit de la réaction d'un anhydride polyisobutényl-succinique dont le groupement polyisobutylène (PIB) a une masse moléculaire moyenne en nombre (Mn) de 1000 g/mol et de la diméthyl-aminopropylamine ; (2) composition d'additif constituée de di-t-butyl-2,6 méthyl-4 phénol ; dicyclohexylamine ; N,N-bis(2-éthylhexyl)-[(1,2,4-triazol-1-yl)méthyl]amine ; et N,N'-disalicylidène 1,2-diaminopropane. | | |

Les propriétés détergentes de la composition de carburant constituée de la coupe d'hydrocarbures C1 seule, et des compositions C2 et C3 ont été évaluées.

Les performances en termes de détergence ont été évaluées en utilisant le test moteur XUD9, consistant à déterminer la perte de débit définie comme correspondant à la restriction du flux d'un gazole émis par l'injecteur d'un moteur Diesel à préchambre au cours de son fonctionnement, selon la méthode d'essai moteur normée CEC F-23-1-01. L'objectif de ce test est d'évaluer l'aptitude de la composition d'additifs testé(s) à réduire les dépôts sur les injecteurs d'un moteur Peugeot XUD9 A/L à quatre cylindres et à injection à préchambre Diesel.

Les tests ont été effectués avec un moteur Peugeot XUD9 A/L à quatre cylindres et à injection à préchambre Diesel équipé d'injecteurs propres dont on a déterminé le débit au préalable.

Le moteur suit le cycle d'essai détaillée dans le tableau IV suivant répété 134 fois pour une durée totale de 10 heures et 3 minutes :

**[Tableau IV]**

| Etape | Durée (s) | Vitesse (tour/min) | Couple (Nm) |
|---|---|---|---|
| 1 | 30 | 1200 ± 30 | 10 ± 2 |
| 2 | 60 | 3000 ± 30 | 50 ±2 |
| 3 | 60 | 1300 ± 30 | 35 ± 2 |
| 4 | 120 | 1850 ± 30 | 50 ± 2 |

Les conditions de test sont les suivantes :
Débit du liquide de refroidissement (étape 2 uniquement): 85 ± 5 l/min
Températures :
   - Sortie liquide de refroidissement : 95 ± 2°C
   - Huile : 100 ± 5°C
   - Entrée d'air : 32 ± 2°C
   - Carburant (à la pompe) : 31 ± 2°C
Pressions :
   - A l'entrée de la pompe de carburant : -50 à + 100 mbar
   - A la sortie de la pompe de carburant : -100 à + 100 mbar
   - Pression de refoulement d'échappement (étape 2 uniquement) : 50 ± 10 mbar
   - entrée d'air : 950 ± 10 mbar.

Les deux phases consécutives suivantes ont été effectuées, avec a même méthode d'essai pour chaque phase :
- Phase 1 d'encrassement (ou « dirty up ») avec un carburant diesel classique de type B7, conforme à la norme EN 590. La perte de débit évaluée après cette première phase est de 80%.
- Phase 2 de nettoyage (ou « clean up ») avec le carburant candidat.

En fin d'essai, le débit des injecteurs est à nouveau évalué. La perte de débit est mesurée sur les quatre injecteurs. Les résultats sont exprimés en pourcentage de perte de débit pour différentes levées d'aiguille. Usuellement on compare les valeurs d'encrassement à 0,1 mm de levée d'aiguille car elles sont plus discriminantes et plus précises et répétables (répétabilité < 5%). L'évolution de la perte de débit avant / après essai permet de déduire la perte de débit en pourcentage. Compte tenu de la répétabilité de l'essai, un effet détergent significatif est affirmable pour une réduction de perte de débit soit un gain en débit supérieure à 10 points (>10%).

En fin d'essai à l'issue de la phase de nettoyage, la perte de débit des injecteurs est à nouveau évaluée.

Les résultats obtenus sont détaillés dans le tableau V ci-dessous :

**[Tableau V]**

| Composition | C1 | C2 | C3 |
|---|---|---|---|
| Perte de débit (%) | 59 | 3 | 0 |

Les résultats ci-dessus montrent que la composition selon l'invention conduit à de très bons résultats en termes de nettoyage des injecteurs encrassés (effet « clean-up »).

En effet, l'utilisation de la composition constituée de la coupe C1 seule permet de réduire de 21% (80 - 59) la perte de débit, ce qui signifie qu'une partie substantielle des dépôts présents à la surface des injecteurs ont été éliminés.

L'utilisation des compositions C2 et C3, qui contiennent une faible teneur de l'Additif 1 (additif détergent) permet d'augmenter encore cet effet, et d'obtenir une élimination complète des dépôts (perte de débit nulle ou quasi nulle).

## Revendications

1. Utilisation, pour réduire les dépôts présents dans les parties internes d'un moteur à allumage par compression, d'une composition de carburant comprenant au moins 85% en poids d'une ou plusieurs coupes d'hydrocarbures paraffiniques constituée(s) d'une ou plusieurs huile(s) végétale(s) hydrotraitée(s), ladite (lesdites) coupe(s) ayant une gamme de distillation comprise dans la gamme allant de 100 à 400°C, une teneur en paraffines supérieure ou égale à 90% en poids, et contenant au moins 70% en poids d'iso-paraffines, par rapport au poids de ladite coupe.

2. Utilisation selon la revendication précédente, **caractérisée en ce que** la gamme de distillation de ladite coupe d'hydrocarbures paraffiniques est comprise dans la gamme allant de 130 à 350°C, de préférence de 150 à 320°C.

3. Utilisation selon l'une quelconque des revendications précédentes, **caractérisée en ce que** la teneur en paraffines de ladite coupe d'hydrocarbures paraffiniques est supérieure ou égale à 95% en poids, de préférence supérieure ou égale à 99% en poids, plus préférentiellement supérieure ou égale à 99,5% en poids, mieux supérieure ou égale à 99,9% en poids, par rapport au poids total de ladite coupe.

4. Utilisation selon l'une quelconque des revendications précédentes, **caractérisée en ce que** ladite coupe d'hydrocarbures paraffiniques contient au moins 90% en poids d'iso-paraffines, par rapport au poids de ladite coupe.

5. Utilisation selon l'une quelconque des revendications précédentes, **caractérisée en ce que** la composition de carburant comprend au moins 90% en poids de la ou des coupes d'hydrocarbures paraffiniques, de préférence au moins 93% en poids, plus préférentiellement au moins 95% en poids, encore plus préférentiellement au moins 99% en poids, et mieux encore au moins 99,5% en poids.

6. Utilisation selon l'une quelconque des revendications précédentes, **caractérisée en ce que** la composition de carburant contient en outre au moins un premier additif constitué d'un sel d'ammonium quaternaire, obtenu par réaction avec un agent de quaternarisation d'un composé azoté comprenant une fonction amine tertiaire, ce composé étant le produit de la réaction d'un agent d'acylation substitué par un groupement hydrocarboné et d'un composé comprenant au moins un groupement amine tertiaire et au moins un groupement choisi parmi les amines primaires, les amines secondaires et les alcools.

7. Utilisation selon la revendication précédente, **caractérisée en ce que** l'agent d'acylation substitué par un groupement hydrocarboné est un anhydride polyisobutényl-succinique.

8. Utilisation selon l'une quelconque des revendications 6 et 7, **caractérisée en ce que** ledit composé comprenant au moins un groupement amine tertiaire et au moins un groupement choisi parmi les amines primaires, les amines secondaires et les alcools est choisi parmi les amines de formule (I) ou (II) suivantes : 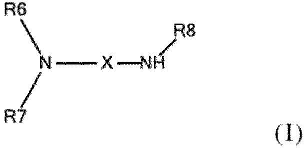 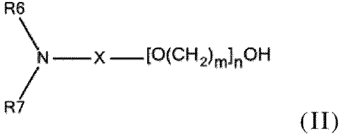 dans lesquelles : R6 et R7 sont identiques ou différents et représentent, indépendamment l'un de l'autre, un groupement alkyle ayant de 1 à 22 atomes de carbone; X est un groupement alkylène ayant de 1 à 20 atomes de carbone ; m est un nombre entier compris entre 1 et 5 ; n est un nombre entier compris entre 0 et 20 ; et R8 est un atome d'hydrogène ou un groupement alkyle de C1 à C22 ; et de préférence parmi les amines de formule (I).

9. Utilisation selon l'une quelconque des revendications 6 à 8, **caractérisée en ce que** la composition de carburant comprend le ou les premiers additifs à une teneur allant de 5 à 1000 ppm, de préférence de 10 à 500 ppm, et plus préférentiellement de 50 à 200 ppm en poids, par rapport au poids total de la composition.

10. Utilisation selon l'une quelconque des revendications précédentes, **caractérisée en ce que** la composition de carburant comprend en outre au moins un second additif constitué d'un agent anti-oxydant choisi parmi les composés comprenant un groupement phénol, de préférence choisi parmi les alkyl-phénols, en une teneur allant de 2 à 500 ppm, de préférence de 5 à 250 ppm, et plus préférentiellement de 10 à 150 ppm en poids, par rapport au poids total de la composition.

11. Utilisation selon l'une quelconque des revendications précédentes, **caractérisée en ce que** la composition de carburant comprend en outre :
- un ou plusieurs agents anti-oxydants aminés choisis parmi les amines aliphatiques, cycloaliphatiques et aromatiques, et de préférence la dicyclohexylamine, en une teneur allant de 0,5 à 25 ppm, par rapport au poids total de la composition ; et/ou
un ou plusieurs agents passivateurs de métaux choisis parmi les amines substituées par des groupements triazole, et plus préférentiellement parmi la N,N-bis(2-éthylhexyl)-[(1,2,4-triazol-1-yl)méthyl]amine et la N,N'-bis- (2 éthylhexyl)-4-méthyl-1H-benzotriazole amine, seules ou en mélange, en une teneur allant de 0,5 à 25. ppm, par rapport au poids total de la composition ; et/ou
- un ou plusieurs agents chélatants, de préférence choisis parmi les amines substituées par des groupements N,N'-disalicylidène, et plus préférentiellement le N,N'-disalicylidène 1,2-diaminopropane, présents en une teneur allant de 0,2 à 50 ppm, par rapport au poids total de la composition.

12. Utilisation selon l'une quelconque des revendications précédentes, pour réduire les dépôts présents dans les parties internes d'un moteur choisies parmi les suivantes : la chambre de combustion et le système d'injection de carburant, et de préférence le système d'injection de carburant.

13. Utilisation selon l'une quelconque des revendications précédentes, **caractérisé en ce que** le moteur à allumage par compression est un moteur équipant un véhicule ou un engin stationnaire, et notamment un véhicule choisi parmi les véhicules suivants : les véhicules légers, les poids lourds, camions de différentes charges dits « medium duty » et « heavy duty », bennes à ordures ménagères, bus, cars, et les véhicules non routiers, par exemple les engins de chantier ou de/ travaux publics, tracteurs, trains, bateaux.

14. Utilisation selon la revendication précédente, **caractérisée en ce que** le moteur est un moteur diesel de véhicule automobile, de préférence un moteur Diesel à injection directe, en particulier un moteur Diesel à système d'injection Common-Rail.

## Patentansprüche

1. Verwendung, um die in den inneren Teilen eines Kompressionszündungsmotors vorhandenen Ablagerungen zu reduzieren, einer Kraftstoffzusammensetzung, die mindestens 85 Gew.-% einer oder mehrerer paraffinischer Kohlenwasserstofffraktionen umfasst, die aus einem oder mehreren hydrobehandelten Pflanzenöl(en) bestehen, wobei die Fraktion(en) einen Destillationsbereich, der im Bereich von 100 bis 400 °C umfasst ist, einen Paraffingehalt von größer oder gleich 90 Gew.-% aufweisen, und mindestens 70 Gew.-% Isoparaffine, bezogen auf das Gewicht der Fraktion, enthalten.

2. Verwendung nach dem vorstehenden Anspruch, **dadurch gekennzeichnet, dass** der Destillationsbereich der paraffinischen Kohlenwasserstofffraktion im Bereich von 130 bis 350 °C, bevorzugt von 150 bis 320 °C, umfasst ist.

3. Verwendung nach einem der vorstehenden Ansprüche, **dadurch gekennzeichnet, dass** der Paraffingehalt der paraffinischen Kohlenwasserstofffraktion größer oder gleich 95 Gew.-%, bevorzugt größer oder gleich 99 Gew.-%, bevorzugter größer oder gleich 99,5 Gew.-%, besser größer oder gleich 99,9 Gew.-%, bezogen auf das Gesamtgewicht der Fraktion, ist.

4. Verwendung nach einem der vorstehenden Ansprüche, **dadurch gekennzeichnet, dass** die paraffinische Kohlenwasserstofffraktion mindestens 90 Gew.-% Isoparaffine, bezogen auf das Gewicht der Fraktion, enthält.

5. Verwendung nach einem der vorstehenden Ansprüche, **dadurch gekennzeichnet, dass** die Kraftstoffzusammensetzung mindestens 90 Gew.-% der paraffinischen Kohlenwasserstofffraktion(en), bevorzugt mindestens 93 Gew.-%, bevorzugter mindestens 95 Gew.-%, noch bevorzugter mindestens 99 Gew.-% und besser noch mindestens 99,5 Gew.-% umfasst.

6. Verwendung nach einem der vorstehenden Ansprüche, **dadurch gekennzeichnet, dass** die Kraftstoffzusammensetzung weiter mindestens ein erstes Additiv enthält, das aus einem quaternären Ammoniumsalz besteht, das durch Reaktion einer Stickstoffverbindung, die eine tertiäre Aminofunktion umfasst, mit einem Quaternisierungsmittel erhalten wird, wobei diese Verbindung das Produkt der Reaktion eines Acylierungsmittels, das mit einer Kohlenwasserstoffgruppe substituiert ist, und einer Verbindung ist, die mindestens eine tertiäre Aminogruppe und mindestens eine Gruppe, ausgewählt aus primären Aminen, sekundären Aminen und Alkoholen, umfasst.

7. Verwendung nach dem vorstehenden Anspruch, **dadurch gekennzeichnet, dass** das Acylierungsmittel, das mit einer Kohlenwasserstoffgruppe substituiert ist, ein Polyisobutenylbernsteinsäureanhydrid ist.

8. Verwendung nach einem der Ansprüche 6 und 7, **dadurch gekennzeichnet, dass** die Verbindung, die mindestens eine tertiäre Aminogruppe und mindestens eine Gruppe, ausgewählt aus primären Aminen, sekundären Aminen und Alkoholen, umfasst, aus den Aminen der folgenden Formel (I) oder (II) ausgewählt ist: 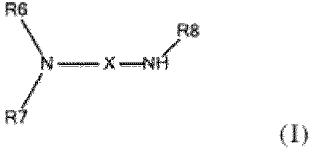 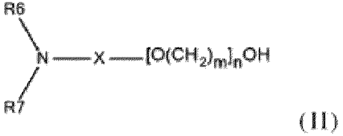 wobei
R6 und R7 gleich oder verschieden sind und unabhängig voneinander eine Alkylgruppe mit 1 bis 22 Kohlenstoffatomen darstellen;
X eine Alkylengruppe mit 1 bis 20 Kohlenstoffatomen ist; m eine ganze Zahl im Bereich zwischen 1 und 5 ist;
n eine ganze Zahl im Bereich zwischen 0 und 20 ist; und R8 ein Wasserstoffatom oder eine C1- bis C22-Alkylgruppe ist;
und bevorzugt aus den Aminen der Formel (I).

9. Verwendung nach einem der Ansprüche 6 bis 8, **dadurch gekennzeichnet, dass** die Kraftstoffzusammensetzung das oder die ersten Additive in einem Gehalt von 5 bis 1000 Gew.-ppm, bevorzugt von 10 bis 500 Gew.-ppm und bevorzugter von 50 bis 200 Gew.-ppm, bezogen auf das Gesamtgewicht der Zusammensetzung, umfasst.

10. Verwendung nach einem der vorstehenden Ansprüche, **dadurch gekennzeichnet, dass** die Kraftstoffzusammensetzung weiter mindestens ein zweites Additiv umfasst, das aus einem Antioxidationsmittel besteht, ausgewählt aus Verbindungen, die eine Phenolgruppe umfassen, bevorzugt ausgewählt aus Alkylphenolen, in einem Gehalt von 2 bis 500 Gew.-ppm, bevorzugt von 5 bis 250 Gew.-ppm, und bevorzugter von 10 bis 150 Gew.-ppm, bezogen auf das Gesamtgewicht der Zusammensetzung.

11. Verwendung nach einem der vorstehenden Ansprüche, **dadurch gekennzeichnet, dass** die Kraftstoffzusammensetzung weiter umfasst:
- ein oder mehrere aminierte Antioxidationsmittel, ausgewählt aus aliphatischen, cycloaliphatischen und aromatischen Aminen, und bevorzugt Dicyclohexylamin, in einem Gehalt von 0,5 bis 25 ppm, bezogen auf das Gesamtgewicht der Zusammensetzung; und/oder
- ein oder mehrere Metallpassivierungsmittel, ausgewählt aus Aminen, die mit Triazolgruppen substituiert sind, und bevorzugter aus N,N-Bis(2-ethylhexyl) - [(1,2,4-triazol-1-yl)methyl]amin und N,N'-Bis-(2-ethylhexyl)-4-methyl-1H-benzotriazolamin, allein oder in Mischung, in einem Gehalt von 0,5 bis 25 ppm, bezogen auf das Gesamtgewicht der Zusammensetzung; und/oder
- einen oder mehrere Chelatbildner, bevorzugt ausgewählt aus Aminen, die mit N,N'-Disalicylidengruppen, und bevorzugter N,N'-Disalicyliden-1,2-diaminopropan substituiert sind, die in einem Gehalt von 0,2 bis 50 ppm, bezogen auf das Gesamtgewicht der Zusammensetzung, vorliegen.

12. Verwendung nach einem der vorstehenden Ansprüche, um die Ablagerungen zu reduzieren, die in den inneren Teilen eines Motors vorhanden sind, ausgewählt aus den folgenden: der Brennkammer und dem Kraftstoffeinspritzsystem, und bevorzugt dem Kraftstoffeinspritzsystem.

13. Verwendung nach einem der vorstehenden Ansprüche, **dadurch gekennzeichnet, dass** der Kompressionszündungsmotor ein Motor ist, mit dem ein Fahrzeug oder eine stationäre Maschine ausgestattet ist, und insbesondere ein Fahrzeug, ausgewählt aus den folgenden Fahrzeugen: Personenkraftwagen, Schwerlastwagen, Lastkraftwagen für unterschiedliche Lasten, die als "Mittel-" und "Schwerlast" bezeichnet werden, Müllwägen, Busse, Reisebusse und nicht straßengebundene Fahrzeuge, zum Beispiel Bau- und Straßenbaumaschinen, Traktoren, Züge, Schiffe.

14. Verwendung nach dem vorstehenden Anspruch, **dadurch gekennzeichnet, dass** der Motor ein Dieselmotor für Kraftfahrzeuge ist, bevorzugt ein Dieselmotor mit Direkteinspritzung, insbesondere ein Dieselmotor mit Common-Rail-Einspritzsystem.

## Claims

1. Use, for reducing the deposits present in the internal parts of a compression ignition engine, of a fuel composition comprising at least 85% by weight of one or more paraffinic hydrocarbon fractions consisting of one or more hydrotreated vegetable oils, said fraction(s) having a distillation range within the range from 100 to 400°C, a paraffin content greater than or equal to 90% by weight and containing at least 70% by weight of isoparaffins, with regard to the weight of said fraction.

2. Use according to the preceding claim, **characterised in that** the distillation range of said paraffinic hydrocarbon fraction is within the range from 130 to 350°C, preferably from 150 to 320°C.

3. Use according to any one of the preceding claims, **characterised in that** the paraffin content of said paraffinic hydrocarbon fraction is greater than or equal to 95% by weight, preferably greater than or equal to 99% by weight, more preferably greater than or equal to 99.5% by weight, better greater than or equal to 99.9% by weight, in relation to the total weight of said fraction.

4. Use according to any one of the preceding claims, **characterised in that** said paraffinic hydrocarbon fraction contains at least 90% by weight of isoparaffins, with regard to the weight of said fraction.

5. Use according to any one of the preceding claims, **characterised in that** the fuel composition comprises at least 90% by weight of said paraffinic hydrocarbon fraction(s), preferably at least 93% by weight, more preferably at least 95% by weight, even more preferably at least 99% by weight, and even better at least 99.5% by weight.

6. Use according to any one of the preceding claims, **characterised in that** the fuel composition further contains at least one first additive consisting of a quaternary ammonium salt, obtained by reaction with a quaternising agent of a nitrogen compound comprising a tertiary amine function, this compound being the product of the reaction of an acylating agent substituted by a hydrocarbon group and of a compound comprising at least one tertiary amine group and at least one group selected from primary amines, secondary amines and alcohols.

7. Use according to the preceding claim, **characterised in that** the acylating agent substituted by a hydrocarbon group is a polyisobutenyl succinic anhydride.

8. Use according to any one of claims 6 and 7, **characterised in that** said compound comprising at least one tertiary amine group and at least one group selected from primary amines, secondary amines and alcohols is selected from the following amines of formula (I) or (II): 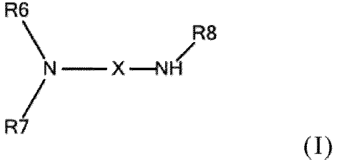 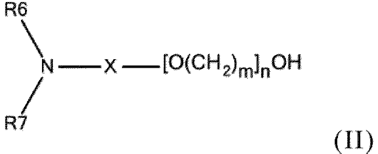 wherein:
R6 and R7 are identical or different and represent, independently from one another, an alkyl group having from 1 to 22 carbon atoms;
X is an alkylene group having from 1 to 20 carbon atoms;
m is an integer between 1 and 5;
n is an integer between 0 and 20; and
R8 is a hydrogen atom or a C1 to C22 alkyl group;
and preferably from the amines of formula (I).

9. Use according to any one of claims 6 to 8, **characterised in that** the fuel composition comprises the first additive(s) with a content ranging from 5 to 1000 ppm, preferably from 10 to 500 ppm, and more preferably from 50 to 200 ppm by weight, in relation to the total weight of the composition.

10. Use according to any one of the preceding claims, **characterised in that** the fuel composition further comprises at least one second additive consisting of an antioxidant agent selected from the compounds comprising a phenol group, preferably selected from alkyl phenols, in a content ranging from 2 to 500 ppm, preferably from 5 to 250 ppm, and more preferably from 10 to 150 ppm by weight, in relation to the total weight of the composition.

11. Use according to any one of the preceding claims, **characterised in that** the fuel composition further comprises:
- one or more amino antioxidant agents selected from aliphatic, cycloaliphatic and aromatic amines, and preferably dicyclohexylamine, in a content ranging from 0.5 to 25 ppm, in relation to the total weight of the composition; and/or
- one or more metal passivator agents selected from amines substituted by triazole groups, and more preferably from N,N-bis(2-ethylhexyl)-[(1,2,4-triazol-1-yl)methyl]amine and N,N'-bis(2-ethylhexyl)-4-methyl-1H-benzotriazole amine, alone or in a mixture, in a content ranging from 0.5 to 25 ppm, in relation to the total weight of the composition; and/or
- one or more chelating agents, preferably selected from amines substituted by N,N'-disalicylidene groups, and more preferably N,N'-disalicylidene 1,2-diaminopropane, present in a content ranging from 0.2 to 50 ppm, in relation to the total weight of the composition.

12. Use according to any one of the preceding claims, for reducing the deposits present in the internal parts of an engine selected from the following ones: the combustion chamber and the fuel injection system, and preferably the fuel injection system.

13. Use according to any one of the preceding claims, **characterised in that** the compression ignition engine is an engine equipping a vehicle or stationary machinery, and particularly a vehicle selected from the following vehicles: light duty vehicles, heavy goods vehicles, trucks of various loads known as "medium duty" and "heavy duty", household waste collection trucks, buses, coaches, and non-road vehicles for example construction and/or public works machinery, tractors, trains, boats.

14. Use according to the preceding claim, **characterised in that** the engine is a motor vehicle diesel engine, preferably a direct injection compression ignition engine, in particular a Common Rail direct injection diesel engine.
